# EUROPEAN PATENT SPECIFICATION

(11) **EP 1 111 989 B1**
(45) Date of publication and mention of the grant of the patent: **28.01.2004**
(21) Application number: 00929952.0
(22) Date of filing: 16.05.2000
(51) Int. Cl.: A01J 5/007, A01J 5/08

(54) **AN IMPLEMENT FOR MILKING ANIMALS, SUCH AS COWS**
GERÄT ZUM MELKEN VON TIEREN, WIE ZUM BEISPIEL KÜHEN
MATERIEL DE TRAITE D'ANIMAUX TELS QUE DES VACHES

(30) Priority: 07.07.1999 NL 1012529
(43) Date of publication of application: 04.07.2001
(60) Divisional application: 03077518.3
(73) Proprietor: Lely Enterprises AG, 6300 ZUG (CH)
(72) Inventor: VAN DEN BERG, Karel, NL-2971 BR Bleskensgraaf (NL)
(74) Representative: Corten, Maurice Jean F.M.
(86) International application number: PCT/NL2000/000324
(87) International publication number: WO 2001/003497

(56) References cited:
- EP-A- 0 534 564
- EP-A- 0 645 079
- WO-A-93/13651
- WO-A-96/36212
- NL-C- 1 007 266

## Description

The invention relates to an implement for milking animals, such as cows, comprising a milking machine with teat cups.

Such an implement is known from EP-A-0645079.

In the known implement sensors for establishing the milk flow, for determining how far a teat has penetrated into the space of the teat cup, and for determining the air flow can be incorporated in the teat cup.

The invention aims at providing an alternative implement.

In accordance with the invention this is achieved in that at least one teat cup is provided with a mass inertia sensor. With the aid of such a mass inertia sensor it can be established whether the teat cup falls from the teat.

In accordance with an inventive feature, the signal supplied by the mass inertia sensor is transmitted to a processing unit in a wireless manner and/or via a fixed connection, such as e.g. an electric wire or an optical fibre, or via contact surfaces.

From NL-A-1007266 it is known per se that sensors disposed in the milk line transmit signals to a processing unit in a wireless manner.

According to a further inventive feature, if there is established by means of the mass inertia sensor that a teat cup has fallen from a teat, the processing unit emits a signal, so that the vacuum in the teat cup is removed.

According to again another inventive feature, if there is established by means of the mass inertia sensor that a teat cup has fallen from a teat, the processing unit emits a signal, in order that the relevant teat cup is automatically connected to the teat.

According to a further inventive feature, the implement comprises a milking robot with a robot arm with the aid of which the teat cups are automatically connected to the teats of the animal to be milked. According to again another aspect of the invention, the processing unit comprises a computer.

The invention will now be explained in further detail with reference to the accompanying drawings in which:
Figure 1 shows part of a milking robot arm with a teat cup that is provided with sensors which are connected to a transmitter which is capable of exchanging data with a receiver via a wireless connection;
Figure 2 shows a second embodiment of a wireless connection, and
Figure 3 shows a teat cup with a mass inertia sensor according to the invention.

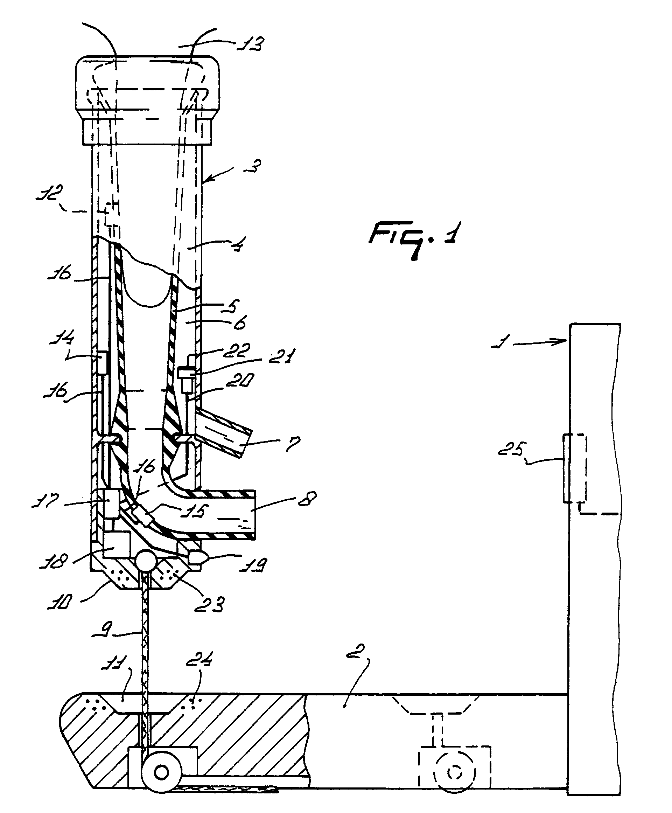

Figure 1 shows part of a robot arm construction 1 of a (non-shown) milking robot. The robot arm construction 1 comprises a carrier 2 for carrying teat cups 3. In the exemplary embodiment only one teat cup 3 is depicted. However, it will be obvious that, depending on the kind of animal which is being milked, two or more teat cups may be carried by the carrier 2. The teat cup 3 comprises an outer casing 4 and a flexible liner 5. Between the outer casing 4 and the teat cup liner 5 there is located a pulsation chamber 6 in which a vacuum and an atmospheric pressure are alternately applied. A pulse tube 7 is connected to the pulsation chamber 6. Near the lower side of the teat cup 3 there is further connected a milk tube 8 to the teat cup 3. By means of a cord 9, which has one side connected to the teat cup 3 and the other side to a (non-shown) control cylinder, the teat cup 3 can be drawn against the carrier 2. Near its lower side the teat cup 3 has a tapering part 10, while the carrier 2 has a tapering recess 11. When the teat cup 3 is drawn onto the carrier 2 by means of the cord 9, the teat cup 3 is brought into a predetermined position as a result of the tapering parts 10 and 11. Near the upper side of the teat cup liner 5 there is disposed a first sensor 12 with the aid of which there can be checked whether the teat cup 3 is connected to a teat 13. The first sensor 12 may be designed as a temperature sensor. In the pulsation chamber 6 there is further included a second sensor 14 with the aid of which the vacuum level in the pulsation chamber 6 can be determined. Near the lower side of the teat cup liner 5 there is further included a third sensor 15 with the aid of which the conductivity of the milk obtained is determined. The first, second and third sensors 12; 14; 15 are connected to a transmitter 17 via wires 16. The transmitter 17 is fed by an accumulator 18. The transmitter 17 is further provided with a transmitter element 19 which is disposed near the lower side of the teat cup 3. The transmitter and the accumulator and the transmitter element 17; 18; 19 are embedded in the material of which the lower side of the teat cup 3 is made. This has the advantage that the transmitter 17 and the accumulator 18 and the transmitter element 19 are less vulnerable. Via a wire 20 the transmitter 17 is further connected to a device 21 for generating energy. As a result of the alternating difference in pressure in the pulsation chamber 6, the device 21 is capable of generating electrical energy. For that purpose the device 21 comprises a membrane 22 which is reciprocated under the influence of the alternating difference in pressure. To the membrane 22 there is connected a (non-shown) magnet which is moved in a (non-shown) coil. In the lower, tapering part 10 of the teat cup 3 there is further embedded a first coil 23 which is in connection with the accumulator 18. Around a tapering recess 11 in the carrier 2 there is disposed a second coil 24 which is connected to a (non-shown) energy source. When the teat cup 3 is drawn onto the carrier 2, the accumulator 18 can be charged in a wireless manner via the coils 23 and 24. The robot arm construction 1 is further provided with a receiver 25 which is in connection with a (non-shown) processing unit. During and/or after milking, measurement data measured by the sensors are transmitted to the receiver 25 in a wireless manner via the transmitter element 19. Thus the supervision of the milking process and/or the examination of the milk obtained and/or the examination of the physical condition of the animal is/are effected in a proper manner.

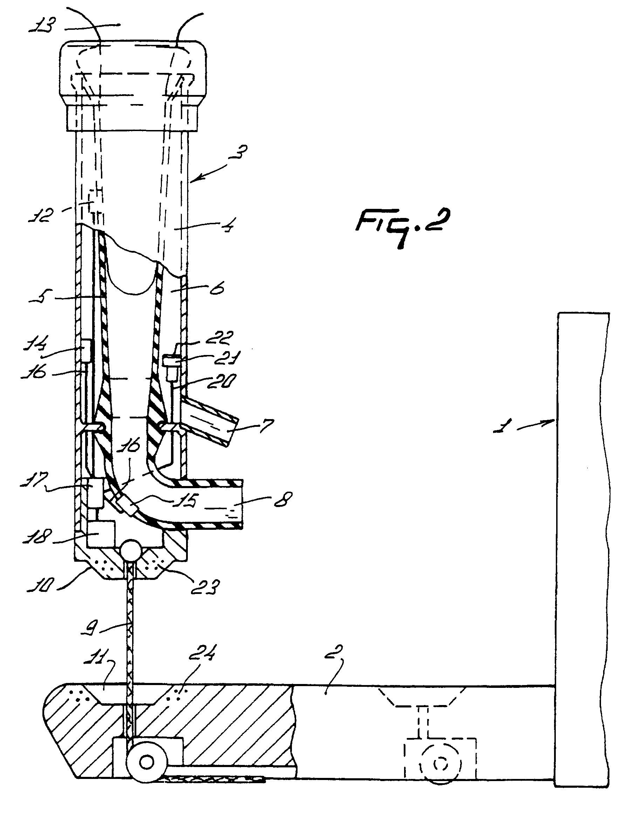

Figure 2 shows a second embodiment, in which parts corresponding to those of the first embodiment are indicated by the same reference numerals. In the second embodiment, the wireless connection is constituted by the first and second coils 23; 24. The two coils 23; 24 can be used both as transmitters and as receivers.

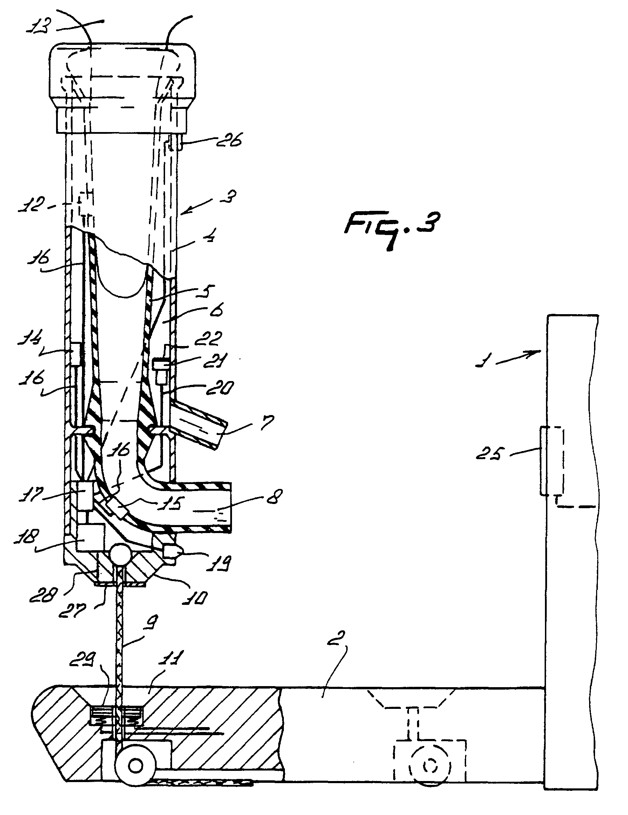

Figure 3 shows an embodiment of the invention, in which the teat cup 3 is provided with a mass inertia sensor 26 with the aid of which there is established whether the teat cup 3 falls from the teat 13. If there is established that the teat cup 3 has fallen from the teat 13, the vacuum in the teat cup 3 is removed and the teat cup is drawn onto the carrier 2 by means of the cord 9, whereupon the teat cup 3 is connected again to the teat 13 by means of the robot arm construction 1. The lower side of the teat cup 3 shown in Figure 3 is further provided with a first contact surface 27 which is connected to the accumulator 18 via a wire 28. The first contact surface 27 makes contact with a second contact surface 29 which is disposed on the carrier 2. The first and second contact surfaces 27; 29 form part of a not completely shown battery charger for the accumulator 18. For the purpose of achieving a proper contact between the first and second contact surfaces 27; 29, the second contact surface is designed as a resilient one. However, it will be obvious that also the first contact surface 27 and/or the two contact surfaces 27; 29 may be designed as resilient ones.

## Claims

1. An implement for milking animals, such as cows, comprising a milking machine with teat cups (3), **characterized in that** at least one teat cup (3) is provided with a mass inertia sensor (26).

2. An implement as claimed in claim 1, **characterized in that** the signal supplied by the mass inertia sensor (26) is transmitted to a processing unit in a wireless manner and/or via a fixed connection, such as e.g. an electric wire or an optical fibre (28), or via contact surfaces (27; 29) .

3. An implement as claimed in claim 2, **characterized in that**, if there is established by means of the mass inertia sensor (26) that a teat cup (3) has fallen from a teat, the processing unit emits a signal, so that the vacuum in the teat cup (3) is removed.

4. An implement as claimed in claim 2 or 3, **characterized in that**, if there is established by means of the mass inertia sensor (26) that a teat cup (3) has fallen from a teat (13), the processing unit emits a signal, in order that the relevant teat cup (3) is automatically connected to the teat.

5. An implement as claimed in claim 2, 3 or 4, **characterized in that** the processing unit comprises a computer.

6. An implement as claimed in any one of the preceding claims, **characterized in that** the implement comprises a milking robot with a robot arm (1) with the aid of which the teat cups (3) are automatically connected to the teats (13) of an animal to be milked.

## Patentansprüche

1. Vorrichtung zum Melken von Tieren, wie z. B. Kühen, die eine Melkmaschine mit Zitzenbechern (3) umfaßt,
**dadurch gekennzeichnet, daß** mindestens ein Zitzenbecher (3) mit einem Trägheitssensor (26) versehen ist.

2. Vorrichtung nach Anspruch 1,
**dadurch gekennzeichnet, daß** das von dem Trägheitssensor (26) gelieferte Signal drahtlos und/oder über eine feste Verbindung, wie z. B. eine elektrische Leitung oder einen Lichtwellenleiter (28) oder über Kontaktflächen (27; 29) zu einer Verarbeitungseinheit übertragen wird.

3. Vorrichtung nach Anspruch 2,
**dadurch gekennzeichnet, daß**, wenn mittels des Trägheitssensors (26) festgestellt wird, daß ein Zitzenbecher (3) von einer Zitze abgefallen ist, die Verarbeitungseinheit ein Signal gibt, so daß das Vakuum in dem Zitzenbecher (3) entfernt wird.

4. Vorrichtung nach Anspruch 2 oder 3,
**dadurch gekennzeichnet, daß**, wenn mittels des Trägheitssensors (26) festgestellt wird, daß ein Zitzenbecher (3) von einer Zitze (13) abgefallen ist, die Verarbeitungseinheit ein Signal gibt, damit der betreffende Zitzenbecher (3) automatisch an die Zitze angeschlossen wird.

5. Vorrichtung nach Anspruch 2, 3 oder 4,
**dadurch gekennzeichnet, daß** die Verarbeitungseinheit einen Computer umfaßt.

6. Vorrichtung nach einem der vorhergehenden Ansprüche,
**dadurch gekennzeichnet, daß** die Vorrichtung einen Melkroboter mit einem Roboterarm (1) umfaßt, mittels dessen die Zitzenbecher (3) automatisch an die Zitzen (13) eines zu melkenden Tieres angeschlossen werden.

## Revendications

1. Matériel pour traire des animaux, tels que des vaches, comprenant une machine de traite comportant des gobelets trayeurs (3), **caractérisé en ce qu'**au moins un gobelet trayeur (3) est pourvu d'un capteur d'inertie de masse (26).

2. Matériel selon la revendication 1, **caractérisé en ce que** le signal délivré par le capteur d'inertie de masse (26) est transmis à une unité de traitement d'une manière sans fil et/ou par l'intermédiaire d'une connexion fixe, telle que, par exemple, un fil électrique ou une fibre optique (28), ou par l'intermédiaire de surfaces de contact (27, 29).

3. Matériel selon la revendication 2, **caractérisé en ce que**, s'il est établi, au moyen du capteur d'inertie de masse (26), qu'un gobelet trayeur (3) est tombé d'un trayon, l'unité de traitement émet un signal, de sorte que le vide ne soit plus appliqué au gobelet trayeur (3).

4. Matériel selon la revendication 2 ou 3, **caractérisé en ce que**, s'il est établi, au moyen du capteur d'inertie de masse (26), qu'un gobelet trayeur (3) est tombé d'un trayon (13), l'unité de traitement émet un signal, afin que le gobelet trayeur (3) concerné soit automatiquement relié au trayon.

5. Matériel selon la revendication 2, 3 ou 4, **caractérisé en ce que** l'unité de traitement comprend un ordinateur.

6. Matériel selon l'une quelconque des revendications précédentes, **caractérisé en ce que** le matériel comprend un robot de traite comportant un bras de robot (1) à l'aide duquel les gobelets trayeurs (3) sont automatiquement reliés aux trayons (13) d'un animal à traire.
